(19) Europäisches Patentamt

European Patent Office

Office européen des brevets

(11) Veröffentlichungsnummer: **0 543 838 B1**

(12) **EUROPÄISCHE PATENTSCHRIFT**

(45) Veröffentlichungstag der Patentschrift: **11.01.95**

(21) Anmeldenummer: **91913724.0**

(22) Anmeldetag: **03.08.91**

(86) Internationale Anmeldenummer:
**PCT/EP91/01461**

(87) Internationale Veröffentlichungsnummer:
**WO 92/03510 (05.03.92 92/06)**

(51) Int. Cl.⁶: **C09D 7/00**, //B05D1/02

(54) **ZWEIKOMPONENTENMITTEL ZUR KOAGULATION VON LACKEN, WACHSEN UND BESCHICHTUNGSMITTELN.**

(30) Priorität: **14.08.90 DE 4025730**

(43) Veröffentlichungstag der Anmeldung:
**02.06.93 Patentblatt 93/22**

(45) Bekanntmachung des Hinweises auf die
Patenterteilung:
**11.01.95 Patentblatt 95/02**

(84) Benannte Vertragsstaaten:
**BE DE ES FR GB**

(56) Entgegenhaltungen:
**EP-A- 0 158 896**
**EP-A- 0 168 625**
**GB-A- 2 011 371**
**US-A- 4 380 495**
**US-A- 4 699 730**

(73) Patentinhaber: **Henkel Kommanditgesellschaft auf Aktien**

**D-40191 Düsseldorf (DE)**

(72) Erfinder: **GEKE, Jürgen**
**Stoffeler Damm 108**
**D-4000 Düsseldorf 1 (DE)**
Erfinder: **MARGEIT, Ragnar**
**Kaiserstrasse 46**
**D-4100 Duisburg 14 (DE)**
Erfinder: **FEHR, Hans**
**Sophienstrasse 6**
**D-4000 Düsseldorf 13 (DE)**

**Beschreibung**

Die Erfindung betrifft in Form zweier Komponenten formulierte Mittel zur Koagulation von Lacken, Wachsen und Beschichtungsmitteln, deren wäßrige Aufschlämmungen (Slurries) sowie deren Verwendung in Umlaufwässern von Lackentsorgungsanlagen.

Bei der Aufbringung von Lacken, Wachsen oder ähnlichen, nicht wasserlösliche organische Substanzen enthaltenden Beschichtungsmaterialien auf metallische Oberflächen oder Kunststoffoberflächen, z.B. in der Automobilindustrie, gelingt es nicht, die Lacke bzw. Beschichtungsmaterialien restlos auf die zu beschichtenden Teile aufzubringen. Speziell bei der Lackierung von Kraftfahrzeug-Karosserien fällt in den Lackspritzkabinen sogenanntes "Overspray" an, das mittels Wasser aus den Lackspritzkabinen entfernt und in ein sogenanntes "Beruhigungsbecken" gespült wird. Um einerseits die Funktion der wasserführenden Leitungs-, Düsen - und Berieselungssysteme durch klebende Lackpartikel nicht zu stören und andererseits das umlaufende Wasser von den aufgenommenen Inhaltsstoffen zu entsorgen, müssen zur Koagulierung der genannten Stoffe dem Wasser Chemikalien zugegeben werden. Die Chemikalienzugabe sollte in einem Arbeitsgang die Entklebung der verspritzten und vom Wasser aufgenommenen Lackpartikel und deren Agglomeration zu einem austragungsfähigen Koagulat bewirken.

Zur Koagulierung herkömmlicher, vor allem in der Automobilindustrie verwendeter Lacke steht eine Reihe von neutralen und alkalischen Produkten zur Verfügung. Um eine Koagulierung, d.h. Entklebung der Lackpartikel und deren Agglomeration zu einem austragungsfähigen Koagulat, zu erreichen, wurden dem in den Lackspritzkabinen und angeschlossenen Leitungen und Aggregaten umlaufenden Wasser bisher alkalische pulverförmige und alkalische flüssige Produkte sowie pulverförmige neutrale Produkte zugesetzt.

Die bis dahin bekannten Mittel wiesen bei ihrer Verwendung zur Koagulation herkömmlicher Lacke eine Reihe von Nachteilen auf: So benötigten sie eine relativ lange Zeit, um die Lackpartikelchen zu koagulieren und das zur Austragung überschüssiger Lacknebel verwendete Wasser befriedigend zu entsorgen. In ungünstigen Fällen führte dies zur Ablagerung miteinander verklebender Lackteilchen in den Rohrleitungssystemen unmittelbar im Anschluß an die Lakkierkabine. Außerdem enthielten die meisten bis dahin bekannten Koagulationsmittel Substanzen (beispielsweise anorganische Anionen wie Chlorid oder Sulfat), die sich im Umlaufwasser anreicherten und korrosiv gegenüber den Anlagenteilen wirkten. Die dadurch erzwungenen häufigen Badwechsel wurden zunehmend als nachteilig angesehen. Da aus wassertechnischen Gründen eine Verlängerung der Standzeit der Entsorgungsbäder anzustreben ist, ist eine Mitverwendung solcher Substanzen unerwünscht, die sich schnell in den Entsorgungsbädern anreichern und damit die Funktionsfähigkeit der Anlage aus verschiedenen Gründen beeinträchtigen.

In den bisher aus dem Stand der Technik bekannten Verfahren zur Koagulation von Lacken und Beschichtungsmitteln hing es weitgehend von den vorhandenen technischen Anlagen ab, ob entweder ein Lackkoagulierungsmittel verwendet wurde, durch das das Koagulat im Beruhigungsbecken flotierte, d.h. zum Aufschwimmen brachte, oder ob ein Koagulierungsmittel verwendet werden mußte, durch das das Koagulat sedimentierte. Im ersteren Fall war ein Abschöpfen des Koagulats von der Wasseroberfläche möglich, während im letzteren Fall die sedimentierten Koagulate mittels eines Kratzbandes vom Beckenboden abgeräumt wurden. Zunehmend kamen jedoch Lackentsorgungslinien in Gebrauch, in denen es erforderlich war, die entklebten und koagulierten Lackpartikel in einer gleichmäßigen Dispersion zu halten. Je nach Lackqualität und Lackart war es somit erforderlich, das spezifische Verhalten der Lackpartikel im Einzelfall dadurch zu beeinflussen, daß man zur Flotation neigende Lacke stärker sedimentierte, so daß eine gleichmäßige Dispersion erhalten werden konnte, oder zur Sedimentation neigende Lacke dazu veranlassen konnte, stärker aufzuschwimmen und damit ebenfalls in Dispersion zu belassen.

Die einzigen bekannten Mittel, die bisher zu befriedigender Lackkoagulation in derartigen Anlagen beitrugen, enthielten Schichtsilikate, die in das Umlaufwasser eingebracht wurden. An der Oberfläche von Bentoniten konnte beispielsweise eine Lackadsorption bewirkt und damit die Entklebung der Lackpartikelchen sichergestellt werden. Probleme ergaben sich jedoch beim Austrag der Agglomerate aus den Leitungen und Anlagenteilen. Besonders an Ekken und Kanten der Anlage, aber auch in über längere Strecken geführten Leitungen an Stellen nachlassenden Drucks, setzten sich die Agglomerate ab, was ein baldiges Verstopfen der jeweiligen Leitung zur Folge hatte. Die Anlage mußte zumindest kurzfristig stillgelegt und die Störung beseitigt werden. Derartige Störungen im Betriebsablauf, die mitunter einen Stillstand der gesamten Produktion zur Folge hatten, konnten nicht hingenommen werden.

In der DE - PS 34 21 289 werden Mittel zur Entklebung und Koagulation von Kunstharzlackanteilen in Naßabscheidern von Spritzlackieranlagen offenbart, die 5 bis 20 Gew.-% eines Wachses, 10 bis 30 Gew.-% eines Alkanolamins, 0,5 bis 5 Gew.-% eines Entschäumers und Wasser enthalten. Diese Mittel stellten zwar einen Fortschritt gegenüber dem oben beschriebenen Stand der Technik dar, konnten jedoch schwierig zu entklebende Lacke, wie beispielsweise "High-solid-Lacke" mit hohem Feststoffgehalt oder Polyurethan-

2

Steinschlag-Schutzgrund-Füllerlacke, nicht in Dispersion bringen bzw. halten und so eine kontinuierliche Koagulatentfernung ermöglichen.

Aufgabe der vorliegenden Erfindung war es, Koagulationsmittel für Lacke und Beschichtungsmittel zur Verfügung zu stellen, die den genannten Nachteilen des Standes der Technik abhelfen. Insbesondere sollten die neuen Koagulationsmittel nicht nur eine gute Entklebung der Lacke und Beschichtungsmittel unter Agglomeratbildung ermöglichen, sondern auch einen guten Austrag des gebildeten Agglomerats dadurch fördern, daß sich die Feststoffe gleichmäßig in der Dispersion halten. Damit sollte ein kontinuierliches Abziehen der Koagulate aus dem Umlaufwasser ohne Absetzen in kritischen Anlagenteilen sowohl in den oben erwähnten Anlagen mit kontinuierlichem Koagulatabzug als auch in herkömmlichen Flotations- oder Sedimentationsanlagen sichergestellt werden.

Die vorliegende Erfindung betrifft demzufolge ein Zweikomponenten-Lackkoagulationsmittel, bestehend aus den Komponenten A und B, wobei sich Komponente A aus

a) 50 bis 100 Gew.-% mindestens eines Alumosilikates,

b) 0 bis 30 Gew.-% mindestens einer Kieselsäure und/oder ihrer Alkali- und Erdalkalisalze,

c) 0 bis 30 Gew.-% eines Erdalkalisalzes,

d) 0 bis 20 Gew.-% eines Cyanamides, Dicyandiamides und/oder Calciumcyanamides,

e) 0 bis 10 Gew.-% eines protonierten oder kationisch modifizierten Polyethylenimines,

und sich Komponente B aus

a) 5 bis 30 Gew.-% Wachsen, synthetischen Wachsen und/oder Wachsanaloga,

b) 70 bis 95 Gew.-% Wasser

c) 0 bis 20 Gew.-% eines Cyanamides, Dicyandiamides und/oder Calciumcyanamides,

d) 0 bis 10 Gew.-% eines protonierten oder kationisch modifizierten Polyethylenimines,

zusammensetzt.

Die Erfindung betrifft außerdem wäßrige Aufschlämmungen (Slurries) derartiger Zweikomponenten-Koagulationsmittel, die ein oder mehrere Alumosilikat(e), ein oder mehrere Wachs(e) und/oder Wachsanaloga, gegebenenfalls einen oder mehrere an sich bekannte(n) Wirkstoff(e) und/oder Hilfsstoff(e) für die Koagulation und/oder Konfektionierung und Wasser enthalten.

Die Erfindung betrifft letztlich die Verwendung der genannten Mittel und/oder ihrer wäßrigen Aufschlämmungen zur Koagulation von Lacken, Wachsen und/oder Beschichtungsmitteln in Umlaufwässern und Koagulationsseen von Lackentsorgungsanlagen.

Im Rahmen der erfindungsgemäßen Komponente A des Zweikomponenten-Koagulationsmittels wird bzw. werden ein oder mehrere Alumosilikat(e) als essentieller Bestandteil in einer Menge von 50 bis 100 Gew.-%, vorzugsweise 60 bis 90 Gew.-%, eingesetzt. Darunter werden hier wie in der nachfolgenden Beschreibung und auch in den Patentansprüchen Schichtsilikate mit kryptokristalliner Mehrschichtenstruktur verstanden, die aus mehreren zweidimensional unendlichen Silikatanionenschichten bestehen, in denen Siliciumatome gegen Aluminiumatome ausgetauscht sind. Die Silikatanionenschichten werden über Kationen einer Zwischenschicht elektrostatisch vernetzt. Die nicht starre Verbindung der einzelnen Schichten untereinander ermöglicht es, daß in die Zwischenschichten Moleküle geeigneter Größe, beispielsweise Wasser, in mehrfach molarer Menge eingelagert werden kann. Dadurch werden die Schichtenabstände vergrößert und das Mineral als solches gequollen. Alumosilikate, die zwischen die Schichten Wasser eingelagert enthalten und dadurch gequollen sind, werden ebenfalls von der vorliegenden Erfindung umfaßt. Erfindungsgemäß können einzelne Alumosilikate oder auch Mischungen von Alumosilikaten verschiedener Zusammensetzung als Alumosilikatkomponente in die Koagulationsmittel eingesetzt werden. Es ist an dieser Stelle darauf zu verweisen, daß derartige Alumosilikate in den im industriellen Maßstab verwendeten Mengen in großem Umfang abgebaut werden und Naturprodukte darstellen, deren Zusammensetzung gewissen Schwankungen unterworfen ist. Produkte mit derartigen Eigenschaften sind ebenfalls von der vorliegenden Erfindung umfaßt.

In einer bevorzugten Ausführungsform enthalten die erfindungsgemäßen Koagulationsmittel als Alumosilikat-Komponente(n) eine oder mehrere Verbindungen aus der Gruppe der Tonminerale auf Alkalimetall- und Erdalkalimetallalumosilikat-Basis, wobei solche Koagulationsmittel besonders bevorzugt sind, die Tonminerale auf Magnesiumalumosilikat-Basis enthalten. Dies bedeutet nichts anderes, als daß die Metallionen der zwischen den Silikatanionenschichten liegenden Kationenschichten Alkalimetall- oder Erdalkalimetallionen, besonders bevorzugt Magnesiumionen, sind.

Mit besonderem Vorteil enthalten die erfindungsgemäßen Koagulationsmittel als Alumosilikatkomponente(n) ein oder mehrere Mineral(ien) aus der Gruppe Beidellit, Bentonit, Bobes, Dickit, Halloysit, Hectorit, Kaolinit, Montmorillonit, Nakrit und Nontronit. Von diesen wiederum sind Bentonit oder Hectorit oder Mischungen der beiden Mineralien in beliebigem Mengenverhältnis besonders bevorzugt, da diese zu Koagulationsmitteln mit besonders guten Entklebungseigenschaften und gutem Koagulataustragevermögen führen.

Unter "Bentoniten" und "Hectoriten" werden hier wie in der folgenden Beschreibung und in den Patentansprüchen solche silikatischen Mineralien des oben beschriebenen Typs verstanden, die eine Mehrschichtenstruktur aufweisen, deren einzelne Schichten nicht starr miteinander verbunden sein müssen, sondern durch Einlagerung beispielsweise von Wasser aufgeweitet und die Mineralien dadurch gequollen sind. In Hectoriten stellt neben Aluminium Magnesium einen Großteil der Kationen; zusätzlich weisen die anionischen Schichten Fluorid-Einlagerungen auf. Im Gegensatz dazu sind Bentonite reine Natriumaluminiumsilikate mit Montmorillonit-ähnlicher Grundstruktur. Sie sind ebenfalls dadurch quellbar, daß in die kationische Zwischenschichten eine mehr oder weniger große Menge Wasser, beispielsweise eine 2- bis 7-fache molare Menge, eingelagert werden kann. Kaolinit, das den Hauptbestandteil des Kaolins darstellt, hat ebenfalls eine Mehrschichtenstruktur, die aus silikatischen Anionen und Aluminium-Kationen besteht.

Die erfindungsgemäßen Koagulationsmittel enthalten eines oder mehrere der genannten Alumosilikate. Dabei entspricht es einer Ausführungsform der vorliegenden Erfindung, daß die Alumosilikat Komponente der Koagulationsmittel in Form eines Pulvers konfektioniert ist. Die Konfektionierung in Pulverform erleichtert die Lagerung, das Umfüllen und den Transport der Koagulationsmittel, da das Problem des Absetzens der Feststoffe in größeren Gebinden nicht erst auftritt und zudem verhindert wird, daß mehr oder weniger große Wassermengen vom Herstellungsort zu den Anwendern transportiert werden müssen.

Entsprechend einer weiteren Ausführungsform enthalten die erfindungsgemäßen Koagulationsmittel in der Komponente A zusätzlich zu den Alumosilikat-Komponenten eine oder mehrere Verbindungen aus der Gruppe Kieselsäuren und/oder deren Alkalimetall- und Erdalkalimetallsalze. Von den Salzen sind die Metasilikate und Pyrosilikate besonders bevorzugt, wobei die genannten Verbindungen einzeln oder in Mischungen beliebigen Verhältnisses verwendet werden können. Derartige, gegebenenfalls zusätzlich einsetzbaren Verbindungen sind in Gesamtmengen von 0,1 bis 30 Gew.-%, vorzugsweise 10 bis 20 Gew.-% - bezogen auf die Gesamtmenge der Komponente A - in den Koagulationsmitteln zugegen. Talkum, ein Magnesiumsilikat der ungefähren Zusammensetzung $Mg_3(OH)_2Si_4O_{10}$, sei als bevorzugtes Beispiel genannt.

Weitere Bestandteile der erfindungsgemäßen Komponente A können Erdalkalisalze in einer Menge von 0,1 bis 30 Gew.-%, vorzugsweise 5 bis 25 Gew.-% sein. Im Sinne dieser Erfindung werden die Salze von Calcium und/oder Magnesium, insbesondere Calciumcarbonat, bevorzugt eingesetzt.

Im Rahmen der erfindungsgemäßen Komponente B des Zweikomponenten-Koagulationsmittel wird bzw. werden in der vorliegenden Erfindung ein oder mehrere Wachs(e) und/oder deren Analoga in einer Menge von 5 bis 30 Gew.-%, vorzugsweise 10 bis 20 Gew.-% - bezogen auf die Gesamtmenge der Komponente B - als essentieller Bestandteil eingesetzt. Diese Wachse können natürlichen oder synthetischen Ursprungs sein. Unter natürlichen Wachsen werden dabei solche verstanden, die entweder unmittelbar aus natürlichen Quellen erhältlich sind und auch als solche eingesetzt werden können oder solche, die aus natürlichen Quellen durch industrielle Verfahren der Gewinnung und/oder Reinigung zugänglich gemacht werden können. In diesem Sinne sind bevorzugte natürliche Wachse, die erfindungsgemäß Verwendung finden, beispielsweise Candelilla-Wachs, das aus den Blättern von Euphorbia cerifera (Mexico) erhältlich ist, Carnaubawachs, das aus den Blättern der brasilianischen Carnaubapalme gewonnen werden kann, Bienenwachs, das in roher, d.h. unbehandelter Form oder nach chemischer Bleichung eingesetzt werden kann, oder Rohmontanwachs, das üblicherweise aus Braunkohle gewonnen wird. Kenndaten der genannten Wachse können der Fachliteratur entnommen werden, beispielsweise "Ullmanns Encyclopädie der technischen Chemie", Band 24, Seite 1 bis 49, 4. Auflage 1984, "Fette, Seifen, Anstrichmittel 67 (1965) 334 ff." und "Römpps Chemie-Lexikon, Franck'sche Verlagsbuchhandlung, Stuttgart, S. 4562, 8. Auflage, 1988". Aus der Gruppe der genannten Wachse sind Carnaubawachs und Rohmontanwachs besonders bevorzugt, da sie in gleichbleibender Qualität preiswert zur Verfügung stehen und zu Koagulationsmitteln mit gutem Entklebungsvermögen und der Fähigkeit führen, das entklebte Koagulat problemlos auszutragen. Die genannten Wachse können allein oder in beliebigen Abmischungen miteinander verwendet werden.

Anstelle von oder auch zusammen mit den oben genannten Wachsen natürlicher Provenienz können auch synthetische Wachse in den erfindungsgemäßen Mitteln verwendet werden. Diese haben üblicherweise ein hohes Molekulargewicht (Polyethylenwachse) oder bestehen aus Wachsanaloga, beispielsweise Wachssäuren, Wachsester und Metallsalze von Fettsäuren. Von der großen Zahl der kommerziell erhältlichen synthetischen Wachse lassen sich in den erfindungsgemäßen Mitteln Polyethylenwachse hohen Molekuargewichts (> 20 000) sowie das von der VEBA AG erhältliche synthetische Wachs "Vesto AV 1550" mit den in den Beispielen genannten Kenndaten verwenden.

Anstelle von oder zusammen mit den genannten Wachsen natürlichen oder synthetischen Ursprungs können die Koagulationsmittel gemäß der Erfindung auch ein oder mehrere Wachsanaloga enthalten. Darunter werden hier wie in der folgenden Beschreibung und in den Patentansprüchen solche Verbindun-

EP 0 543 838 B1

gen oder Verbindungsgemische verstanden, die physikalisch und chemisch Wachsen ähnlich sind oder diesen entsprechen und in den Koagulationsmitteln eine Wirkung zeigen, die der der genannten Wachse entspricht. Bevorzugt werden als Wachsanaloga Ester von gesättigten und/oder ungesättigten Fettsäuren mit 8 bis 22 C-Atomen, bevorzugt mit 12 bis 18 C-Atomen, mit Fettalkoholen mit 8 bis 22 C-Atomen, bevorzugt mit 12 bis 18 C-Atomen, oder mit Glycerin verwendet. Aus der Gruppe der infrage kommenden Verbindungen sind Myricylpalmitat und Talg besonders bevorzugt.

Ein weiterer essentieller Bestandteil der erfindungsgemäßen Komponente B ist eine Menge von 70 bis 95 Gew.-% an Wasser beliebiger Herkunft.

Die Mengenverhältnisse, innerhalb derer die essentiellen Bestandteile Alumosilikat-Komponente und Wachskomponente in den erfindungsgemäßen Zweikomponenten-Koagulationsmitteln vorliegen können, schwanken in weiten Bereichen. Es ist bevorzugt, daß die Koagulationsmittel Alumosilikat(e) und Wachs(e) bzw. deren Analoga im Gewichtsverhältnis 0,1 bis 1000 : 1, vorzugsweise 5 bis 25 : 1, enthalten. Mit besonderem Vorteil wird ein Verhältnis 10 : 1 eingestellt, da sich dabei Koagulationsmittel mit gutem Entklebevermögen und einer guten Fähigkeit bilden, das Koagulat in der Dispersion zu halten, was die Voraussetzung für eine kontinuierliche Koagulatentsorgung ist.

Zusätzlich können die erfindungsgemäßen Komponente A und B gegebenenfalls noch einen oder mehrere an sich aus dem Stand der Technik bekannte(n) Wirkstoff(e) für die Koagulation und/ oder Konfektionierung enthalten. Diese müssen so beschaffen sein, daß sie mit den bisher genannten Komponenten nicht in einer Weise wechselwirken, die das Koagulationsergebnis negativ beeinträchtigt. Als solche sind beispielsweise Cyanamide und/oder Dicyandiamid und/oder Calciumcyanamid zu nennen. Diese Verbindungen sind für die Verwendung in der Lackkoagulation aus der DE-A-34 12 763 bekannt und dort genauestens beschrieben, so daß sie an dieser Stelle keiner weiteren Erklärung bedürfen. Erfindungsgemäß können diese Verbindungen in einer Menge von 0,1 bis 20 Gew.-%, vorzugsweise 3 bis 10 Gew.-%, in den jeweiligen Komponenten A und/oder B eingesetzt werden.

Außerdem können die aus der Lehre der DE-A-33 16 878 bekannten Polyethylenimine und/oder deren protonierte oder kationisch durch Alkylierung modifizierten Derivate in einer Menge von 0,1 bis 10 Gew.-%, vorzugsweise 1 bis 5 Gew.-%, in den jeweiligen Komponenten A und/oder B eingesetzt werden. Die Molekularmassen der Polyethylenimine liegen bevorzugt im Bereich von etwa $5 \times 10^4$ bis $5 \times 10^7$ D.

Als Hilfsstoffe können die beiden Komponenten A und B gegebenenfalls Emulgatoren und/oder Dispergierhilfsmittel in einer Menge von 0,1 bis 10 Gew.-%, vorzugsweise 1 bis 5 Gew.-%, enthalten. Als Emulgatoren können grundsätzlich alle für emulgierende Zwecke in wäßrigen Lösungen bekannten Verbindungen verwendet werden, sofern sie mit den anderen Inhaltsstoffen verträglich sind. Bevorzugte Emulgatoren sind Addukte von Alkylenoxiden an Fettsäuren oder Fettalkohole, die als Einzelverbindungen oder auch in beliebigen Mischungen miteinander verwendet werden können. Das Molverhältnis Alkylenoxid : Fettsäure bzw. Fettalkohol in derartigen Addukten liegt üblicherweise im Bereich von 10 bis 1 : 1. Es ist jedoch darauf hinzuweisen, daß derartige Verbindungen bei der industriellen Synthese immer in Mischungen anfallen, deren Mengenverhaltnisse in Abhängigkeit von eingesetzten Mengen der Edukte, Reaktionsbedingungen usw. über einen mehr oder weniger großen Bereich schwanken und daher das angegebene Molverhältnis auch über- oder unterschritten werden kann. Als Alkylenoxid - Reaktionspartner kommen in erster Linie Ethylenoxid und Propylenoxid infrage; Ethylenoxidaddukte sind als Emulgatoren erfindungsgemäß bevorzugt. Die Fettsäure- und Fettalkohol-Reaktionspartner der erfindungsgemäß als Emulgatoren eingesetzten Addukte stammen aus der Gruppe von Verbindungen der entsprechenden Verbindungsklasse, die 8 bis 22 C-Atome tragen und bevorzugterweise 12 bis 18 C - Atome aufweisen. Bevorzugt sind Addukte von Ethylenoxid an Fettsäuren wie Ölsäure und Talgfettsäure, wobei das Molverhältnis Ethylenoxid : Fettsäure im Bereich von 1 bis 5 : 1 liegt. Emulgatoren aus der Gruppe dieser Verbindungen zeigen in der wäßrigen Phase ein hervorragendes Emulgiervermögen für die organischen Mischungskomponenten und sichern für die Koagulationsmittel gemäß der Erfindung gutes Entklebe-Vermögen und einen problemlosen Koagulat-Austrag. Besonders bevorzugt ist ein Addukt von 1 bis 4 Mol Ethylenoxid an Ölsäure.

Weitere Hilfsstoffe für die Konfektionierung sind Alkanolamine und/oder Amine, die gegebenenfalls den Komponenten A und/oder B in einer Menge von 0,1 bis 10 Gew.-%, vorzugsweise 1 bis 5 Gew.-% zugesetzt werden. In bevorzugten Ausführungsformen weisen diese im Alkylenrest bzw. Alkylrest 1 bis 3 C-Atome auf. Besonders bevorzugt wird eine bzw. werden mehrere Verbindung(en) aus der Gruppe Monoethanolamin, Diethanolamin, Triethanolamin, Monoisopropanolamin, Diisopropanolamin und Triisopropanolamin eingesetzt.

Sollte ein spezieller Typ der Lackentsorgungsanlage die Sedimentation des Koagulats erfordern, so können den erfindungsgemäßen Komponente A und/oder B Mischformale oder Mischether in einer Menge von 0,1 bis 10 Gew.-%, vorzugsweise 1 bis 5 Gew.-% zugesetzt werden, die gegenüber den bekannten, für diesen Zweck eingesetzten nichtionischen Tensiden den Vorteil haben, bei den Temperaturen des Koagulationsprozesses (10 bis 30 °C) nicht zur Bildung von Schaum zu führen oder die Schaumbildung zu unterdrücken. Mischformale (z. B. gemäß DE-A-30 18 135) haben die allgemeine Formel $R^1$-O-(AO)$_m$-CH$_2$-(OB)$_n$-O-$R^2$; Mischether (gemäß der genannten DE-A) haben die allgemeine Formel $R^3$-O-(AO)$_p$-$R^4$. Darin sind die Reste $R^1$ und $R^2$ Alkylreste von Fettalkoholen mit 4 bis 16 C-Atomen, die Reste $R^3$ und $R^4$ Alkylreste von Fettalkoholen mit 4 bis 14 C-Atomen, von Ethylendiamin oder Polyglycerinen, A und B Ethylen- oder Isopropylen-Reste und m und n ganze Zahlen von 1 bis 4 und p eine ganze Zahl im Bereich von 6 bis 30. Soll jedoch ein Aufschwimmen der Koagulatpartikel in den Beruhigungsbecken bewirkt werden, so werden den Lackkoagulationsmitteln gemäß der Erfindung zusätzlich gegebenenfalls Silikate und/oder Phosphate zugesetzt. Als Silikate werden für diesen Zweck beispielsweise Wassergläser oder lösliche oder unlösliche Salze von Orthokieselsäure und deren Kondensationsprodukten bzw. deren dehydratisierten Derivaten (Metakieselsäuren) eingesetzt. Als Phosphate finden lösliche oder unlösliche Salze von Orthophosphorsäure und deren Kondensationsprodukten bzw. deren dehydratisierten Derivaten Verwendung.

Speziellen Anforderungen, wie z. B. der Einstellung eines bestimmten pH-Wertes oder der antimikrobiellen Ausrüstung der Koagulationsmittel, kann dadurch Rechnung getragen werden, daß die Komponenten A und/oder B spezielle Hilfsstoffe enthalten. So können gegebenenfalls Borsäure, die antimikrobielle Wirkung besitzt und gegebenenfalls auch zur pH-Wert-Einstellung beitragen kann, sowie Biozide, z. B. Formaldehyd, Isothiazoline und deren Derivate sowie Pyridin-N-oxid und dessen Derivate, zugesetzt werden. Zur pH-Wert-Einstellung dienen gegebenenfalls auch Phosphorsäure, organische Säuren wie Citronensäure und andere, nichtkorrosive Säuren bzw. deren saure Salze. Als weitere mögliche Bestandteile der erfindungsgemäßen Koagulationsmittel kommen auch Korrosionsinhibitoren und Antischaummittel infrage. Als Korrosionsinhibitoren werden wasserlösliche Salze von Phosphonsäuren und Zinksalze, bevorzugt das Natriumsalz der 2-Phosphonobutan-1,2,3-tricarbonsäure oder das Zinksalz des 2-Pyridinthiol-1-oxids, verwendet. Als Antischaummittel hat sich neben den für diesen Zweck aus dem Stand der Technik bekannten Mitteln das Produkt Dehydran F $^R$ (Fa. Henkel KGaA) bewährt.

Die Herstellung der erfindungsgemäßen Zweikomponenten-Koagulationsmittel erfolgt durch einfaches Vermischen der genannten Komponenten A und B nach aus dem Stand der Technik bekannten Methoden. Welcher der beiden Komponenten die gegebenenfalls zuzusetzenden Bestandteile zugemischt werden, kann in weiten Bereichen frei gewählt werden; es wird dabei zu beachten sein, daß sich der Aggregatzustand der jeweiligen Komponenten bei Zumischen weiterer Bestandteile durchaus verändern kann.

Von der Erfindung umfaßt werden ebenfalls wäßrige Aufschlämmungen (Slurries) der genannten Zweikomponenten-Koagulationsmittel. Diese enthalten zusätzlich zu den Alumosilikaten und Wachsen bzw. Wachsanaloga und gegebenenfalls zu den weiteren oben genannten Komponenten noch Wasser, das in derartigen Aufschlämmungen die Hauptkomponente bildet. In bevorzugten Ausführungsformen enthalten diese Slurries 6 bis 12 Gew.-% an Alumosilikaten und Wachsen bzw. deren Analoga und gegebenenfalls an den sonstigen, oben genannten Wirkstoffen und/oder Hilfsstoffen. Der verbleibende Rest, also 88 bis 94 %, besteht dann aus Wasser. Die Formulierung der Koagulationsmittel gemäß der Erfindung als wäßrige Slurries hat den Vorteil, daß die Schichtsilikate unmittelbar vor der Anwendung in der Koagulation schon in gequollenem Zustand vorliegen und gleich nach dem Zumischen zu den Umlaufwässern und/oder Koagulationsseen ihre entklebende und koagulierende Wirkung entfalten können. Selbstverständlich ist es jedoch auch möglich, die Koagulationsmittel in Form ihrer beiden getrennten Komponenten zum Anwendungsort zu transportieren und diese dann dort durch einfaches Lösen bzw. Suspendieren in der gewünschten Menge Wasser in einen Slurry zu überführen und diesen dann den Umlaufwässern bzw. Koagulationsseen zuzumischen. Die Zugabe erfolgt zweckmäßig an einer Stelle mit kräftiger Turbulenz des Umlaufwassers bei laufender Pumpe bzw. unter Verwendung eines herkömmlichen Rührers, um eine schnelle Verteilung zu gewährleisten.

Die erfindungsgemäßen Koagulationsmittel bzw. ihre wäßrigen Aufschlämmungen (Slurries) werden zur Koagulation Von Lacken, Wachsen und/oder Beschichtungsmitteln in Umlaufwässern und Koagulationsseen von Lackentsorgungsanlagen verwendet. Dabei werden sie den Umlaufwässern und/oder den Koagulationsseen der Anlagen kontinuierlich mittels geeigneter Dosiergeräte zugegeben, wozu sich besonders die beschriebenen wäßrigen Aufschlämmungen eignen. Es ist auch möglich, die Mittel diskontinuierlich, beispielsweise einmal oder mehrmals täglich, zu dosieren. Die Mengen liegen in einer bevorzugten Verwendungsweise in einem solchen Bereich, daß die Menge an wäßriger Aufschlämmung (Slurry), die insgesamt zugegeben wird, 20 bis 100 % der berechneten Menge an Lackoverspray beträgt. Bei unmittelbarer Verwendung der nicht in Wasser aufgeschlämmten beiden Komponenten kann die Menge entsprechend reduziert werden.

Die Mittel zur Koagulation von Lacken, Wachsen und Beschichtungsmitteln entsprechend der obigen Beschreibung zeigen bei der Anwendung hervorragende Eigenschaften: So werden die anfallenden Lackpartikel nicht nur vollständig entklebt, sondern mit den Umlaufwässern auch in Form eines gut austragbaren Koagulats aus den Anlagen ausgetragen, ohne daß es zu Störungen in den Anlagenteilen wegen Verklebungen oder Verstopfungen kommt. Die Lackpartikel werden schwebend in der Dispersion gehalten und können dadurch auch in kontinuierlich arbeitenden Entsorgungsanlagen problemlos von den Umlaufwässern abgetrennt werden. Auch in herkömmlich arbeitenden Anlagen ergeben sich keine Probleme bei der Abtrennung des Koagulats. Dabei sind sie für die Verwendung in herkömmlichen Anlagen, die das entklebte Lackkoagulat aufschwimmen oder sedimentieren lassen, genausogut geeignet wie in den neuerdings eingesetzten, kontinuierlich arbeitenden Entsorgungsanlagen, die das Koagulat in der Dispersion halten und es kontinuierlich entsorgen.

Insbesondere mit den bisherigen Methoden und Mitteln nur schwierig zu entsorgende Lacke, wie Highsolid-Decklacke oder PUR-SteinschlagSchutzgrund-Füllerlacke, können problemlos entklebt und aus den Anlagen ausgetragen werden. Zudem zeigen sich anwendungstechnische Vorteile insofern, als die Mittel in flüssiger Form, also als wäßrige Aufschlämmungen (Slurries) formulierbar sind und ohne Vormisch-Anlage automatisch, d.h. mit kontinuierlich zu überwachenden und zu steuernden Pumpen, den Koagulationsseen zugemischt werden können. Eine Geruchsbelästigung infolge stark riechender Inhaltsstoffe unterbleibt.

Die Erfindung wird durch die nachfolgenden Beispiele näher erläutert. Alle Mengenangaben erfolgen, sofern nicht anders angegeben, in Gew.-%, bezogen auf das anwendungsfertige Koagulationsmittel.

**Beispiele**

Als Alumosilikatkomponenten wurden in den folgenden Beispielen ein Aktivbentonit B der Fa. Erbslöh, Düsseldorf,
ein Kaolin KTG der Fa. Otto Schmidt und
ein Hectorit der Fa. Lanco eingesetzt, die die nachfolgenden Spe
zifikationen hatten:

<u>Aktivbentonit B</u>

a) Chemische Zusammensetzung:

| | | | |
|---|---|---|---|
| $SiO_2$ | 56,0 % | $Al_2O_3$ | 20,6 % |
| $Fe_2O_3$ | 4,7 % | $TiO_2$ | 0,3 % |
| CaO | 2,0 % | MgO | 3,4 % |
| $Na_2O$ | 3,0 % | $K_2O$ | 1,4 % |
| Glühverlust | 8,6 % | | |

b) Korngrößenverteilung (Teilchengröße in $10^{-6}$ m):

| | |
|---|---|
| > 60 | 1,5 % |
| 60 - 40 | 2,0 % |
| 40 - 20 | 1,5 % |
| 20 - 10 | 2,0 % |
| 10 - 2 | 6,0 % |
| < 2 | 87,0 % |

c) Schüttdichte: ca. 0,8 g/cm$^3$
d) Dichte: 2,65 g/cm$^3$
e) pH-Wert: 8 - 10

Kaolin KTG

a) Chemische Zusammensetzung:

| | | | |
|---|---|---|---|
| $SiO_2$ | 59,50 % | $Al_2O_3$ | 26,08 % |
| $TiO_2$ | 0,79 % | $Fe_2O_3$ | 1,33 % |
| CaO | 0,06 % | MgO | 0,32 % |
| $K_2O$ | 5,48 % | $Na_2O$ | 0,19 % |
| Glühverlust | 6,00 % | | |

b) Korngrößenverteilung (Teilchengrößen in $10^{-6}$ m):

| | |
|---|---|
| > 40 | 0,1 % |
| 40 - 20 | 3,7 % |
| 20 - 10 | 11,3 % |
| 10 - 6,3 | 17,3 % |
| 6,3- 3 | 18,3 % |
| 3 - 2 | 10,1 % |
| < 2 | 39,2 % |

c) Schüttdichte: 0,45 g/cm$^3$

Hectorit

a) Chemische Zusammensetzung:

| | | | |
|---|---|---|---|
| $SiO_2$ | 37,3 % | $Al_2O_3$ | 0,1 % |
| $Fe_2O_3$ | 0,1 % | MgO | 17,0 % |
| $Na_2O$ | 1,7 % | CaO | 20,2 % |
| $K_2O$ | 0,1 % | $Li_2O$ | 0,8 % |
| $CO_2$ | 16,2 % | Cl | 0,3 % |
| F | 0,8 % | $H_2O$ | 5,1 % |
| | | (Kristallwasser) | |

b) Vermahlung: 50 bis 60 % unter 325 mesh ($45 \times 10^{-6}$ m)
94 bis 96 % unter 200 mesh ($75 \times 10^{-6}$ m)
c) Feuchtegehalt: 4 bis 12 %
d) Dichte: 2,65 g/cm$^3$
e) pH-Wert: 9 bis 10 (5 %ige Paste)

Durch Zusammenmischen der im folgenden angegebenen Komponenten A und B im Gewichtsverhältnis von A : B = 10 : 1 wurden Zweikomponenten-Lackkoagulationsmittel gemäß der Erfindung hergestellt, die in Form der beiden Komponenten A und B oder auch in Form von deren wäßrigen Aufschlämmungen (Gehalt der Slurries an den Komponenten A und B: 6 bis 12 Gew.-%) gelagert, vertrieben und eingesetzt wurden:

Komponente A (Alumosilikat-Komponente):

| Beispiel 1 | | Beispiel 2 | |
|---|---|---|---|
| 60 % | Bentonit | 100 % | Bentonit |
| 25 % | Calciumcarbonat | | |
| 5 % | Cyanamid | | |
| 10 % | Talkum | | |

| Beispiel 3 | | Beispiel 4 | |
|---|---|---|---|
| 83 % | Bentonit | 50 % | Bentonit |
| 15 % | Kieselsäure (Aerosil [R], Fa. DEGUSSA) | 50 % | Kaolin |
| 2 % | protoniertes Polyethylenimin (MM: ca. 2 x 10³ D; 50 %ige wäßrige Lösung, Super Floc [R] C 577; Fa Am. Cyanamid Co.) | | |

| Beispiel 5 | |
|---|---|
| 50 % | Bentonit |
| 50 % | Hectorit |

Komponente B (Wachs-Komponente):

| Beispiel 6 | | Beispiel 7 | |
|---|---|---|---|
| 14 % 3 % | Rohmontanwachs Ölsaure + 4 EO | 12 % 4 % | Bienewachs Isophorondiamin |
| 1 % 4 % | Diisopropanolamin Cyanamid | 4 % | $C_8$-Fettalkohol + 4 EO-butylether |
| 78 % | Wasser | 80 % | Wasser |

## Beispiel 8                                Beispiel 9

10  %  Synthesewachs Vesto AV 1550       11  %  Talg

     (Fa. VEBA)[1]                            4  %  Ölsäure + 4 EO

 0,5%  Kaliumhydroxid                 85  %  Wasser

89,5%  Wasser

[1] Kenndaten des synthetischen Wachs' "Vesto AV 1550" der
Firma VEBA AG

| | |
|---|---|
| Erstarrungspunkt (°C) (nach DGF M-III-4a) | 90 - 95 |
| Tropfpunkt (°C) (nach DGF M-III-3) | 102 - 107 |
| Penetrationszahl (nach DIN 51 579) | 1 - 2 |
| Viskosität bei 120 °C (cP) | 180 - 220 |
| Säurezahl (nach DGF M-IV-2) | 22 - 26 |
| Verseifungszahl (nach DGF M-IV-2) | 47 - 52 |

Die Mittel wurden sowohl in niedrigen als auch in höheren Konzentrationen (20 bis 100 %, bezogen auf die berechnete Menge an Lackoverspray) den Umlaufwässern von Lackspritzkabinen-Entsorgungsanlagen zugemischt, in denen

(a) ein roter Einkomponenten-High-solid-Decklack der Fa. Herberts bzw.

(b) ein pastellweißer Einkomponenten-Highsolid-Decklack der Fa. Wiederhold

verarbeitet wurden.

Beide Lacke zählen zu den Lacktypen, deren Entsorgung über wäßrige Systeme bisher immer mit Schwierigkeiten verbunden war.

In beiden Fällen wurden die Lackpartikel schon bei niedriger Zugabemenge der erfindungsgemäßen Zweikomponenten-Lackkoagulationsmittel vollständig entklebt. Der Lackaustrag erfolgte ebenfalls problemlos: Störungen der Anlagen (herkömmliche Anlagen und ESKA-Anlagen) traten in keinem Fall auf. In letzteren konnten die Lackpartikel kontinuierlich ausgetragen werden.

Zur Bewertung der Ergebnisse dienten die Kriterien der folgenden Bewertungsskala:

**Koagulierung**

K 1 = entklebt
K 2 = austragsfähig (Oberfläche entklebt, innen noch klebrig)
K 3 = nicht entklebt

**Aussehen**

A 1 = feindispers
A 2 = mitteldispers
A 3 = grobdispers
A 4 = Klumpen

**Schreibweise**

z. B.: K 1/ A 2 = entklebt, mitteldispers

| Mischung | EB-Decklack[1] mellanroed 173-2 | | EB-Decklack[2] pastellweiß M53139/L90D | |
|---|---|---|---|---|
| | Koagulierung | Aussehen | Koagulierung | Aussehen |
| Beispielmischung 1 | K 2 / K 3 | A 3 | K 2 / K 3 | A 3 |
| Beispielmischung 2 | K 2 / K 3 | A 3 | K 2 / K 3 | A 3 |
| Beispielmischung 3 | K 2 / K 3 | A 3 | K 2 / K 3 | A 3 |
| Beispielmischung 4 | K 2 / K 3 | A 3 | K 2 / K 3 | A 3 |
| Beispielmischung 5 | K 2 / K 3 | A 3 | K 2 / K 3 | A 3 |
| Beispielmischung 6 | K 2 / K 3 | A 2 | K 2 / K 3 | A 2 |
| Beispielmischung 8 | K 2 / K 3 | A 2 | K 2 / K 3 | A 2 |
| Kombination der Beispielmischungen 1 und 6 | K 1 | A 1 | K 1 | A 1 |
| Kombination der Beispielmischungen 1 und 8 | K 1 | A 1 | K 1 | A 1 |
| Kombination der Beispielmischungen 2 und 6 | K 1 | A 1 | K 1 | A 1 |
| Kombination der Beispielmischungen 2 und 8 | K 1 | A 1 | K 1 | A 1 |

[1] Einbrenn-Decklack, mellanroed, 173-2, Fa. Herberts
[2] Wiedolux Einbrenn-Decklack, pastellweiß, M 53139/L90D, Firma Wiederhold

Alle Versuche wurden mit jeweils 20 Gew.-% und 100 Gew.-% der in der Tabelle angegebenen Formulierungen, bezogen auf 100 g Lackoverspray, durchgeführt.

Die erfindungsgemäße Kombination einer Beispielmischung A (Beispiel 1 und 2) mit einer Beispielmischung B (Beispiel 6 und 8) zeigte überraschenderweise deutlich bessere Koagulierungseigenschaften als eine einzelne Beispielmischung A oder B.

**Patentansprüche**

1. Die Erfindung betrifft ein Zweikomponenten-Lackkoagulationsmittel, bestehend aus den Komponenten A und B, wobei sich Komponente A aus
   a) 50 bis 100 Gew.-% mindestens eines Alumosilikates,
   b) 0 bis 30 Gew.-% mindestens einer Kieselsäure und/oder ihrer Alkali- und Erdalkalisalze,
   c) 0 bis 30 Gew.-% eines Erdalkalisalzes,
   d) 0 bis 20 Gew.-% eines Cyanamides, Dicyandiamides und/oder Calciumcyanamides,
   e) 0 bis 10 Gew.-% eines protonierten oder kationisch modifizierten Polyethylenimines,
   und sich Komponente B aus
   a) 5 bis 30 Gew.-% Wachsen, synthetischen Wachsen und/oder Wachsanaloga,
   b) 70 bis 95 Gew.-% Wasser,
   c) 0 bis 20 Gew.-% eines Cyanamides, Dicyandiamides und/oder Calciumcyanamides,
   d) 0 bis 10 Gew.-% eines protonierten oder kationisch modifizierten Polyethylenimines,
   zusammensetzt.

11

2. Koagulationsmittel nach Anspruch 1, enthaltend als Alumosilikatkomponente(n) eine oder mehrere Verbindungen aus der Gruppe der Tonminerale auf Alkalimetall- und Erdalkalimetallalumosilikat-Basis, bevorzugt auf Magnesiumalumosilikat-Basis.

3. Koagulationsmittel nach Ansprüchen 1 und 2, enthaltend als Alumosilikat-Komponente ein oder mehrere Mineral(ien) aus der Gruppe Beidellit, Bentonit, Bobes, Dickit, Halloysit, Hectorit, Kaolinit, Montmorillonit, Nakrit und Nontronit, bevorzugt Bentonit und/oder Hectorit.

4. Koagulationsmittel nach Ansprüchen 1 bis 3, enthaltend zusätzlich zu den Alumosilikat-Komponenten eine oder mehrere Verbindungen aus der Gruppe Kieselsäuren und ihre Alkalimetall- und Erdalkalimetallsalze, bevorzugt Alkalimetall- und/oder Erdalkalimetallmetasilikate und/oder -pyrosilikate, besonders bevorzugt Talkum, in Gesamtmengen bis zu 30 Gew.-% der eingesetzten Alumosilikate.

5. Koagulationsmittel nach Anspruch 1, enthaltend in der Komponente B als Wachs(e) eine oder mehrere Komponenten aus der Gruppe der Wachse natürlichen Ursprungs, bevorzugt Candelilla-Wachs, Carnaubawachs, Bienenwachs und/oder Rohmontanwachs.

6. Koagulationsmittel nach Anspruch 1, enthaltend in der Komponente B als Wachs(e) eine oder mehrere Komponenten aus der Gruppe der Wachse synthetischen Ursprungs, bevorzugt Polyethylenwachse.

7. Koagulationsmittel nach Anspruch 1, enthaltend in der Komponente B als Wachsanaloga Ester von gesättigten und/oder ungesättigten Fettsäuren mit 8 bis 22 C-Atomen, bevorzugt mit 12 bis 18 C-Atomen, mit Fettalkoholen mit 8 bis 22 C-Atomen, bevorzugt mit 12 bis 18 C-Atomen, oder mit Glycerin.

8. Koagulationsmittel nach Ansprüchen 1 bis 7, enthaltend ein oder mehrere Alumosilikat(e) und ein oder mehrere Wachs(e) und/oder deren Analoga im Gewichtsverhältnis Alumosilikat(e) : Wachs(e) von 0,1 bis 1000 : 1, bevorzugt von 10 : 1.

9. Koagulationsmittel nach Ansprüchen 1 bis 8, enthaltend als gegebenenfalls zugesetzte Wirkstoffe und/oder Hilfsstoffe, Emulgator- und/oder Dispergierhilfsmittel, Amine und/oder Alkanolamine, Mischformale und/oder Mischether, Säuren, Biozide, Korrosionsinhibitoren, Antischaummittel, Silikate und/oder Phosphate.

10. Wäßrige Aufschlämmungen (Slurries) der Koagulationsmittel nach Ansprüchen 1 bis 9, enthaltend
    - ein oder mehrere Alumosilikat(e),
    - ein oder mehrere Wachs(e) und/oder Wachsanaloga,
    - einen oder mehrere an sich bekannte(n) Wirkstoff(e) und/oder Hilfsstoff(e) für die Koagulation und/oder Konfektionierung
    - und Wasser.

11. Wäßrige Aufschlämmungen (Slurries) nach Anspruch 10, enthaltend 6 bis 12 Gew.-% an Alumosilikat(en), Wachs(en) und/oder deren Analoga und gegebenenfalls an sonstigen Wirkstoffen und Hilfsstoffen und 88 bis 94 Gew.-% Wasser.

12. Verwendung der Koagulationsmittel nach Ansprüchen 1 bis 9 und/oder der wäßrigen Aufschlämmungen (Slurries) nach Ansprüchen 10 und 11 zur Koagulation von Lacken, Wachsen und/oder Beschichtungsmitteln in Umlaufwässern und/oder Koagulationsseen von Lackentsorgungsanlagen.

13. Verwendung nach Anspruch 12, dadurch gekennzeichnet, daß die wäßrigen Aufschlämmungen dem Umlaufwasser des Lackentsorgungssystems und/oder dem Wasser des Koagulationssees zugemischt werden.

14. Verwendung nach Ansprüchen 12 und 13, dadurch gekennzeichnet, daß die zugemischte Menge an wäßriger Aufschlämmung (Slurry) 20 bis 100 % der berechneten Menge an Lackoverspray beträgt.

**Claims**

1. A two-component paint coagulant consisting of the components A and B,
   the component A of which has been composed of
   a) from 50 to 100% by weight of at least one aluminosilicate,
   b) from 0 to 30% by weight of at least one silicic acid and/or the alkali metal and alkaline earth metal salts thereof,
   c) from 0 to 30% by weight of an alkaline earth metal salt,
   d) from 0 to 20% by weight of a cyanamide, dicyandiamide and/or calcium cyanamide,
   e) from 0 to 10% by weight of a protonated or cationically modified polyethyleneimine, and
   the component B of which has been composed of
   a) from 5 to 30% by weight of waxes, synthetic waxes and/or wax analogues,
   b) from 70 to 95% by weight of water,
   c) from 0 to 20% by weight of a cyanamide, dicyandiamide and/or calcium cyanamide,
   d) from 0 to 10% by weight of a protonated or cationically modified polyethyleneimine.

2. The coagulant according to claim 1, containing, as the aluminosilicate component (s), one or more compounds from the group of the clay minerals based on alkali metal and alkaline earth metal aluminosilicates, and preferably those derived from magnesium aluminosilicates.

3. The coagulant according to claims 1 and 2, containing, as the aluminosilicate component(s), one or more mineral(s) from the group of beidellite, bentonite, bobes, dickite, halloysite, hectorite, kaolinite, montmorillonite, nakrite and nontronite, and preferably bentonite and/or hectorite.

4. The coagulant according to claims 1 to 3, containing, in addition to the aluminosilicate components, one or more compounds from the group of silicic acids and the alkali metal and alkaline earth metal salts thereof, preferably alkali metal and/or alkaline earth metal metasilicates and/or pyrosilicates, and especially preferred talc, in a total amount of up to 30% by weight of the aluminosilicate components employed.

5. The coagulant according to claim 1, containing, in the component B as wax(es), one or more components from the group of waxes of natural origin, and preferably candelilla wax, carnauba wax, beeswax and/or crude montan wax.

6. The coagulant according to claim 1, containing, in the component B as wax(es), one or more components from the group of waxes of synthetic origin, and preferably polyethylene waxes.

7. The coagulant according to claim 1, containing, in the component B as wax analogues, esters of saturated and/or unsaturated fatty acids having from 8 to 22 carbon atoms, and preferably from 12 to 18 carbon atoms, with fatty alcohols having from 8 to 22 carbon atoms, and preferably from 12 to 18 carbon atoms, or with glycerol.

8. The coagulant according to claims 1 to 7, containing one or more aluminosilicate(s) and one or more wax(es) and/or the analogues thereof in a ratio by weight of aluminosilicate(s) : wax(es) of from 0.1 to 1000 : 1, and preferably of 10 : 1.

9. The coagulant according to claims 1 to 8, containing, as optionally added active ingredients and/or auxiliary materials, emulsifier and/or dispersing aids, amines and/or alkanolamines, mixed formals and/or mixed ethers, acids, biocides, corrosion inhibitors, anti-foam agents, silicates and/or phosphates.

10. Aqueous slurries of the coagulants according to claims 1 to 9, containing
    - one or more aluminosilicate(s),
    - one or more wax(es) and/or wax analogues,
    - one or more per se known active ingredient(s) and/or auxiliary materials for coagulating and/or confectioning, and
    - water.

**11.** Aqueous slurries according to claim 10, containing from 6 to 12% by weight of aluminosilicate(s), wax-(es) and/or the analogues thereof and optionally other active ingredients and/or auxiliary materials and from 88 to 94% by weight of water.

**12.** Use of the coagulants according to claims 1 to 9 and/or of the aqueous slurries according to claims 10 and 11 for coagulating paints, waxes and/or coating compositions in circulation waters and/or coagulation ponds of paint disposal units.

**13.** Use according to claim 12, characterized in that the aqueous slurries are admixed to the circulation water of paint disposal units and/or to the water of the coagulation pond.

**14.** Use according to claims 12 and 13, characterized in that the amount admixed of the aqueous slurry is from 20 to 100% of the calculated amount of paint overspray.

**Revendications**

**1.** L'invention concerne un agent coagulant à deux composants, constitué des composants A et B, le composant A étant constitué de
    a) 50 à 100 % en poids d'au moins un aluminosilicate;
    b) 0 à 30 % en poids d'au moins un acide silicique et/ou de ses sels de métaux alcalins et alcalino-terreux,
    c) 0 à 30 % en poids d'un sel de métal alcalino-terreux,
    d) 0 à 20 % en poids d'un cyanamide, d'un dicyandiamide et/ou d'un cyanamide de calcium,
    e) 0 à 10 % en poids d'une polyéthylènimine protonée ou à modification cationique
et le composant B étant constitué de
    a) 5 à 30 % en poids de cires, cires synthétiques et/ou analogues de cires,
    b) 70 à 95 % d'eau,
    c) 0 à 20 % en poids d'un cyanamide, d'un dicyandiamide et/ou d'un cyanamide de calcium,
    d) 0 à 10 % en poids d'une polyéthylènimine protonée ou à modification cationique.

**2.** Agent coagulant selon la revendication 1, renfermant comme composant (s) aluminosilicate, un ou plusieurs composés appartenant au groupe des minéraux des argiles à base d'aluminosilicate de métaux alcalins et alcalino-terreux, de préférence à base d'aluminosilicate de magnésium,

**3.** Agent coagulant selon les revendications 1 et 2, renfermant comme composant aluminosilicate, un minéral ou plusieurs minéraux appartenant au groupe de la beidellite, bentonite, bobes, dickite, haloysite, hectorite, kaolinite, montmorillonite, nacrite et nontronite, de préférence la bentonite et/ou l'hectorite.

**4.** Agent coagulant selon les revendications 1 à 3, renfermant en plus des composants aluminosilicate, un ou plusieurs composés appartenant au groupe des acides siliciques eu de leurs sels de métaux alcalins et alcalino-terreux, de préférence des métasilicates et/ou des pyrosilicates de métaux alcalins et/ou alcalino-terreux, avec une préférence particulière, du talc, en proportions totales allant jusqu'à 30 % en poids des aluminosilicates mis en oeuvre.

**5.** Agent coagulant selon la revendication 1, dont le composant B renferme comme cire(s), un ou plusieurs composants appartenant au groupe des cires d'origine naturelle. de préférence la cire de Candelilla, la cire de carnauba, la cire d'abeille et/ou la cire de rohmontane.

**6.** Agent coagulant selon la revendication 1, dont le composant B renferme comme cire(s), un ou plusieurs composants appartenant au groupe des cires d'origine synthétique, de préférence la cire de polyéthylène.

**7.** Agent coagulant selon la revendication 1, dont le composent B renferme comme analogues de cire, des esters d'acides gras saturés et/ou insaturés comportant 8 à 22 atomes de C, de préférence 12 à 18 atomes de C, avec des alcools gras comportant 8 à 22 atomes de C, de préférence 12 à 18 atomes de C, ou avec de la glycérine.

14

**8.** Agent coagulant selon les revendications 1 à 7, renfermant un ou plusieurs aluminosilicates et une ou plusieurs cires et/ou ses (leurs) analogues dans un rapport pondéral entre le ou les aluminosilicates et la ou les cires de 0,1 à 1000:1, de préférence de 10:1.

**9.** Agent coagulant selon les revendications 1 à 8, renfermant comme substances actives et/ou adjuvants éventuellement ajoutés, des adjuvants émulsionnants et/ou dispersants, des amines et/ou des alcanolamines, des aldéhydes formiques mixtes et/ou des éthers mixtes, des acides, des biocides, des inhibiteurs de corrosion, des agents antimousse, des silicates et/ou des phosphates.

**10.** Suspensions aqueuses (slurries) des agents coagulants selon les revendications 1 à 9, renfermant
- un ou plusieurs aluminosilicates
- une ou plusieurs cires et/ou analogues de cire
- une ou plusieurs substances actives et/ou adjuvants connus en soi pour la coagulation et/ou la confection, et
- de l'eau,

**11.** Suspensions aqueuses (slurries) selon la revendication 10, renfermant 6 à 12 % en poids d'aluminosilicate(s), de cire(s) et/ou de ses (leurs) analogues, le cas échéant, d'autres substances actives et adjuvants, et 88 à 94 % en poids d'eau.

**12.** Utilisation des agents coagulants selon les revendications 1 à 9 et/ou des suspensions aqueuses (slurries) selon les revendications 10 et 11, pour la coagulation de laques, cires et/ou enduits dans les eaux de circulation et/ou les bassins de coagulation des installations d'élimination de laques.

**13.** Utilisation selon la revendication 12, caractérisée en ce que les suspensions aqueuses sont additionnées à l'eau de circulation du système d'élimination de laques et/ou à l'eau du bassin de coagulation.

**14.** Utilisation selon les revendications 12 et 13, caractérisée en ce que la quantité additionnée de suspension aqueuse (slurry) représente 20 à 100 % de la quantité calculée d'"overspray"" de laque.